# FASCICULE DE BREVET EUROPEEN

(11) **EP 1 568 023 B1**
(45) Date de publication et mention de la délivrance du brevet: **14.06.2006**
(21) Numéro de dépôt: 03796127.3
(22) Date de dépôt: 02.12.2003
(51) Int. Cl.: G11B 7/24

(54) **SUPPORT D ENREGISTREMENT OPTIQUE INORGANIQUE COMPORTANT UNE COUCHE DE DISSIPATION THERMIQUE**
ANORGANISCHER OPTISCHER AUFZEICHNUNGSTRÄGER MIT EINER WÄRMEABSTRAHLENDE SCHICHT
INORGANIC OPTICAL RECORDING MEDIUM COMPRISING A HEAT DISSIPATION LAYER

(30) Priorité: 03.12.2002 FR 0215196
(43) Date de publication de la demande: 31.08.2005
(73) Titulaire: COMMISSARIAT A L'ENERGIE ATOMIQUE, 75752 Paris (FR); MPO International, 53700 Averton (FR)
(72) Inventeur: POUPINET, Ludovic, F-38360 Sassenage (FR); HYOT, Bérangère, F-38000 Grenoble (FR); ARMAND, Marie-Françoise, F-38140 Vaulnaveys-le-haut (FR)
(74) Mandataire: Jouvray, Marie-Andrée
(86) Numéro de dépôt international: PCT/FR2003/003548
(87) Numéro de publication internationale: WO 2004/053859

(56) Documents cités:
- EP-A- 1 054 393
- FR-A- 2 809 856
- US-A- 4 214 249
- US-A- 4 969 141

## Description

### Domaine technique de l'invention

L'invention concerne un support d'enregistrement optique comportant une couche active en matériau inorganique, apte à subir des déformations mécaniques sous l'effet d'un rayonnement optique, présentant une face avant, destinée à recevoir un rayonnement optique pendant des opérations d'écriture, et une face arrière.

### État de la technique

L'enregistrement optique peut être effectué dans des matériaux à colorant (par exemple dans les applications de type « CD-R : compact disc recordable » et « DVD-R : digital versatile disc recordable »), mais également dans des matériaux inorganiques. Ces derniers peuvent présenter un avantage en termes de coût de production et de performances aux hautes vitesses linéaires. Il y a différentes méthodes pour écrire dans une couche de matériau inorganique. La technique irréversible la plus étudiée dans les années 80 consiste en la formation de marques par ablation laser. La présence de la marque se traduit par une baisse locale de la réflexion d'un faisceau laser à la surface du disque. Cette baisse de la réflexion est lue avec une puissance laser plus faible. Même si la majeure partie des études sur les mécanismes d'ablation a concerné le tellure seul, d'autres matériaux furent envisagés, par exemple des alliages comportant de l'arsenic, de l'antimoine, du sélénium et du soufre, proposés dans l'article « Chalcogenide thin films for laser-beam recordings by thermal creation of holes » de M. Terao *et Al.* (J. Appl. Phys. 50 (11), November 1979).

Cependant dans la plupart de ces études, de fortes puissances ont été utilisées, notamment par M. Terao *et Al.* Les essais faits à l'époque ne correspondaient donc pas aux spécifications d'écriture actuelles. En effet, les puissances utilisées étaient comprises entre 40 mW et 300 mW et les dimensions des marques de l'ordre de 10 µm, tandis que les puissances d'écriture utilisées pour écrire un DVD-R doivent être de l'ordre de 10 mW et la dimension d'une marque de l'ordre de 400 nm de diamètre. Par ailleurs, il est souvent nécessaire de déposer une couche protectrice, par exemple en polymère, sur le support d'enregistrement. Cependant, la présence d'une couche protectrice provoque généralement une dégradation de la qualité des signaux et une augmentation de la puissance d'écriture. Beaucoup de matériaux ont été étudiés, mais peu permettent une écriture de bonne qualité, notamment le tellure et ses alliages avec le germanium, le sélénium et l'antimoine. Malheureusement, ces alliages ne permettent pas d'atteindre les densités de stockage requises pour le format DVD. C'est pourquoi, les colorants se sont imposés pour ce standard. Or, les technologies d'enregistrement optique irréversible dans des matériaux à colorant présentent parfois des coûts élevés, notamment les prix des colorants et les coûts de personnel pour les étapes de manipulation des colorants.

Le document FR2809856 servant de délimitation à la revendication 1, décrit un support d'enregistrement optique comportant une couche active inorganique et une couche semi-réfléchissante réalisée en AI, Zn, Au, Ag, Cu, Ti ou leurs alliages. L'épaisseur de la couche semi-réfléchissante est comprise entre 4nm et 10nm. La couche semi-réfléchissante est disposée sur la face de la couche active recevant le rayonnement optique.

Le document US4214249 décrit un support d'enregistrement optique comportant un substrat, une couche active inorganique et une couche métallique. Sous l'effet d'un rayonnement optique, le métal de la couche métallique se diffuse dans la couche active. La couche métallique est disposée sur la face de la couche active recevant le rayonnement optique.

### Objet de l'invention

L'invention a pour but de remédier à ces inconvénients et, plus particulièrement, de proposer un support inorganique permettant d'atteindre une résolution des marques et une densité de stockage correspondant aux spécifications du format DVD.

Selon l'invention, ce but est atteint par le fait qu'une couche métallique additionnelle est disposée sur la face arrière de la couche active inorganique, ayant de préférence une épaisseur comprise entre 9 nanomètres et 12 nanomètres.

Selon un développement de l'invention, le matériau inorganique de la couche active est un alliage de tellure et de zinc comportant entre 60% et 70% de zinc et entre 30% et 40% de tellure en pourcentage atomique, et de préférence 65% de zinc et 35% de tellure.

Selon un autre développement de l'invention, le support comporte une couche semi-réfléchissante disposée sur la face avant de la couche active et ayant une épaisseur comprise entre 4 nanomètres et 10 nanomètres.

Selon un mode de réalisation préférentiel, le support d'enregistrement comporte une couche protectrice en matériau polymère sur la face arrière.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente un mode de réalisation particulier d'un support d'enregistrement optique selon l'invention.
La figure 2 représente un mode de réalisation particulier d'un support selon l'invention comportant une couche semi-réfléchissante.
La figure 3 représente un mode de réalisation particulier d'un support selon l'invention comportant une couche protectrice.

### Description de modes particuliers de réalisation.

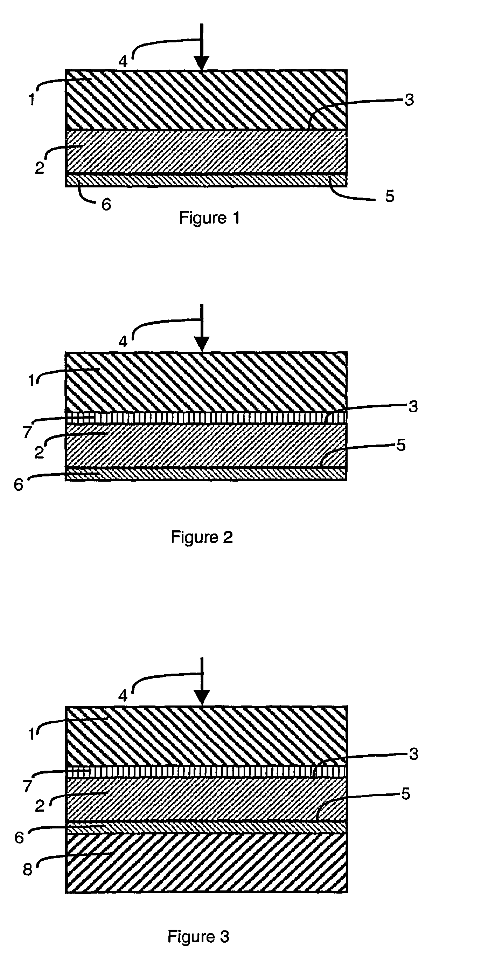

Sur la figure 1, un support d'enregistrement optique comporte un substrat 1 et une couche active 2 en matériau inorganique, apte à subir des déformations sous l'effet d'un rayonnement optique et présentant une face avant 3, destinée à recevoir un rayonnement optique 4 pendant des opérations d'écriture, et une face arrière 5. A titre d'exemple, ces déformations, mécaniques, peuvent être des trous ou des bulles. Le support peut être lu des deux côtés, c'est-à-dire la couche active 2 peut recevoir un rayonnement optique, pendant des opérations de lecture, sur sa face avant 3 ou sur sa face arrière 5. Le substrat 1 est disposé sur la face avant 3 de la couche active 2. Typiquement, la couche active 2 est déposée sur un substrat en plastique, par exemple en polycarbonate. Le support d'enregistrement comporte une couche métallique 6 additionnelle disposée sur la face arrière 5 de la couche active 2. La couche métallique additionnelle 6 permet d'augmenter la dissipation de chaleur dans la couche active 2 lors des opérations d'écriture. Ainsi, la couche active 2 est refroidie plus rapidement, en particulier sur la face arrière. Ceci limite la déformation subie par le matériau fondu pendant la création d'une marque et donc la taille finale des marques. Le support d'enregistrement optique peut, notamment, être de type irréversible.

Dans un mode de réalisation préféré, la couche métallique 6 additionnelle a une épaisseur comprise entre 9 nanomètres et 12 nanomètres. L'épaisseur préférée de la couche métallique 6 additionnelle est 10 nanomètres. La propriété essentielle de la couche métallique 6 additionnelle est la conductivité thermique. Le matériau de la couche métallique 6 additionnelle est, de préférence, pris dans le groupe comprenant l'aluminium, l'or, l'argent, le cuivre et leurs alliages. En effet, ces métaux sont des bons conducteurs thermiques parmi les matériaux standard des technologies des couches minces.

Le support, comportant la couche active 2 et la couche métallique additionnelle 6, permet d'effectuer des opérations d'écriture avec une puissance compatible avec les puissances requises par les normes d'écriture. Ainsi, la dimension des marques ne dépasse pas la dimension requise par les spécifications d'écriture. En appliquant des puissances d'écriture plus élevées, la taille des marques augmente et dépasse la dimension tolérée.

La présence de la couche métallique additionnelle 6 de faible épaisseur peut avoir pour conséquence la réduction de la réflexion de l'ensemble du support, contrairement à une couche métallique plus épaisse (environ 100 nanomètres), qui est parfois disposée, pour augmenter la réflexion, à la face arrière de la couche active organique dans les technologies à base de colorants organiques. L'interface entre une couche métallique et une couche organique présente en effet des propriétés de réflexion différentes de l'interface entre la couche active 2 en matériau inorganique et la couche métallique additionnelle 6, parce que la couche organique est transparente, tandis que la couche active 2 inorganique en alliage est opaque.

Dans un mode de réalisation préféré, le matériau inorganique de la couche active 2 est un alliage de tellure et de zinc comportant entre 60% et 70% de zinc et entre 30% et 40% de tellure en pourcentage atomique. Cet alliage présente des propriétés avantageuses pour la formation des marques par laser, par exemple la déformation de la couche, la formation d'une bulle et la formation d'un trou. Dans un mode de réalisation préféré, l'alliage comporte 65% de zinc et 35% de tellure. La couche active a de préférence une épaisseur comprise entre 15 nanomètres et 50 nanomètres. L'épaisseur doit être ajustée pour permettre de conserver une puissance d'écriture raisonnable avec une réflexion suffisante. En effet, les marques, par exemple des trous ou des cavités, doivent être suffisamment grandes pour créer le contraste de réflexion requis mais pas trop grandes afin de limiter le bruit de lecture. Or, la taille des marques augmente avec l'épaisseur de la couche. Dans un mode préféré, l'épaisseur de la couche active 2 est comprise entre 20 nanomètres et 25 nanomètres, permettant d'obtenir un coefficient de réflexion compris entre 15% et 20%. Dans un autre mode préférentiel, l'épaisseur de la couche active 2 est de 40 nanomètres, permettant d'obtenir un coefficient de réflexion compris entre 25% et 35%.

Comme représenté à la figure 2, le support d'enregistrement optique peut comporter une couche semi-réfléchissante 7 disposée sur la face avant 3 de la couche active 2. Il est souhaitable que cette couche absorbe peu la lumière. La couche semi-réfléchissante 7 étant traversée par le rayonnement optique devant atteindre la couche active 2, son épaisseur doit être ajustée au mieux pour augmenter la réflexion sans augmenter excessivement le seuil d'écriture. La couche semi-réfléchissante 7 a une épaisseur comprise entre 4 nanomètres et 10 nanomètres. Ainsi, le coefficient de réflexion de l'ensemble de la couche active 2 et de la couche semi-réfléchissante 7 peut être adapté au dispositif de détection.

Dans un mode de réalisation préféré, la couche semi-réfléchissante 7 est en métal pris dans le groupe comprenant l'aluminium, l'or, l'argent, le cuivre, le zinc, le titane, le nickel et leurs alliages. Ces métaux font partie des matériaux standard des technologies des couches minces, pouvant présenter des coefficients de réflexion et de transmission suffisamment élevés dans la plage des longueurs d'onde typiquement utilisées pour les opérations de lecture. L'aluminium semble être un métal particulièrement approprié, étant donné qu'il présente une forte réflexion dans tout le spectre optique.

Sur la figure 3, le support d'enregistrement optique comporte, de plus, une couche protectrice 8, de préférence en matériau déformable, par exemple en matériau polymère, sur la face arrière permettant de protéger le disque des modifications physico-chimiques des matériaux, par exemple de l'oxydation, et mécaniques, par exemple des rayures. La couche protectrice 8 est, de préférence, à base de polydiméthylsiloxane et a, de préférence, une épaisseur comprise entre 10 micromètres et 100 micromètres. L'assemblage de la couche protectrice 8 et d'un support comportant une couche active 2 en alliage de zinc et de tellure avec les pourcentages selon l'invention est facile à mettre en oeuvre et la présence d'une couche en polymère ne provoque pas de dégradation du signal de lecture. La couche 8 peut être remplacée par une couche de collage de 20 à 100 micromètres d'épaisseur, sur laquelle est disposée une couche en plastique, par exemple une couche de polycarbonate de 0,6mm d'épaisseur.

Des supports d'enregistrement optique selon l'invention ont été testés dans des conditions correspondant à la norme DVD-R. Ainsi, des marques d'une longueur minimale de 400 nm et d'une longueur maximale de 1866 nm ont été gravées par des impulsions de rayonnement optique de durées correspondantes, notamment d'une durée minimale de 3T et d'une durée maximale de 14T, où T est le temps de pulsation de l'horloge du générateur du signal optique. La longueur des marques étant plus petite que la longueur d'onde du rayonnement optique utilisé, il n'est pas possible de mesurer la longueur des marques par observation par microscope. Cependant la longueur des marques peut être déduite, de manière connue, de la quantité de rayonnement réfléchie par une séquence de marques scrutée par un rayonnement optique. Ainsi, un histogramme des longueurs des marques mesurées peut être établi. L'écart type de chaque histogramme (« jitter ») des marques minimale (3T) et maximale (14T) est inférieur à 8.

## Revendications

1. Support d'enregistrement optique comportant une couche active (2) en matériau inorganique, apte à subir des déformations mécaniques sous l'effet d'un rayonnement optique, présentant une face avant (3), destinée à recevoir un rayonnement optique (4) pendant des opérations d'écriture, et une face arrière (5), support **caractérisé en ce qu'**il comporte une couche métallique additionnelle (6) disposée sur la face arrière (5) de la couche active (2).

2. Support d'enregistrement selon la revendication 1, **caractérisé en ce que** la couche métallique additionnelle (6) a une épaisseur comprise entre 9 nanomètres et 12 nanomètres.

3. Support d'enregistrement selon l'une des revendications 1 et 2, **caractérisé en ce que** le matériau de la couche additionnelle métallique (6) est pris dans le groupe comprenant l'aluminium, l'or, l'argent et le cuivre.

4. Support d'enregistrement selon l'une quelconque des revendications 1 à 3, **caractérisé en ce que** le matériau inorganique de la couche active (2) est un alliage de tellure et de zinc comportant entre 60% et 70% de zinc et entre 30% et 40% de tellure en pourcentage atomique.

5. Support d'enregistrement selon la revendication 4, **caractérisé en ce que** l'alliage comporte 65% de zinc et 35% de tellure.

6. Support d'enregistrement selon l'une des revendications 4 et 5, **caractérisé en ce que** la couche active (2) a une épaisseur comprise entre 15 nanomètres et 50 nanomètres.

7. Support d'enregistrement selon l'une quelconque des revendications 1 à 6, **caractérisé en ce qu'**il comporte une couche semi-réfléchissante (7) disposée sur la face avant (3) de la couche active (2) et ayant une épaisseur comprise entre 4 nanomètres et 10 nanomètres.

8. Support d'enregistrement selon la revendication 7, **caractérisé en ce que** la couche semi-réfléchissante (7) est en métal pris dans le groupe comprenant l'aluminium, l'or, l'argent, le cuivre, le zinc, le titane, le nickel et leurs alliages.

9. Support d'enregistrement selon l'une quelconque des revendications 1 à 8, **caractérisé en ce qu'**il comporte une couche protectrice (8) en matériau polymère disposée sur la face arrière du support.

10. Support d'enregistrement selon la revendication 9, **caractérisé en ce que** la couche protectrice (8) est à base de polydiméthylsiloxane et a une épaisseur comprise entre 10 micromètres et 100 micromètres.

11. Support d'enregistrement selon l'une des revendications 9 et 10, **caractérisé en ce que** la couche protectrice (8) est déformable.

## Claims

1. Optical recording medium comprising an active layer (2) of inorganic material able to undergo mechanical deformations due to the effect of an optical radiation, presenting a front face (3) designed to receive an optical radiation (4) during writing operations, and a rear face (5), medium **characterized in that** it comprises an additional metal layer (6) arranged on the rear face (5) of the active layer (2).

2. Recording medium according to claim 1, **characterized in that** the additional metal layer (6) has a thickness comprised between 9 nanometers and 12 nanometers.

3. Recording medium according to one of the claims 1 and 2, **characterized in that** the material of the additional metal layer (6) is taken from the group comprising aluminium, gold, silver and copper.

4. Recording medium according to any one of the claims 1 to 3, **characterized in that** the inorganic material of the active layer (2) is a tellurium and zinc alloy comprising an atomic percentage of between 60% and 70% of zinc and between 30% and 40% of tellurium.

5. Recording medium according to claim 4, **characterized in that** the alloy comprises 65% of zinc and 35% of tellurium.

6. Recording medium according to one of the claims 4 and 5, **characterized in that** the active layer (2) has a thickness comprised between 15 nanometers and 50 nanometers.

7. Recording medium according to any one of the claims 1 to 6, **characterized in that** it comprises a semi-reflecting layer (7) arranged on the front face (3) of the active layer (2) and having a thickness comprised between 4 nanometers and 10 nanometers.

8. Recording medium according to claim 7, **characterized in that** the semi-reflecting layer (7) is made of metal taken from the group comprising aluminium, gold, silver, copper, zinc, titanium, nickel and alloys thereof.

9. Recording medium according to any one of the claims 1 to 8, **characterized in that** it comprises a protective layer (8) made of polymer material arranged on the rear face of the medium.

10. Recording medium according to claim 9, **characterized in that** the protective layer (8) is polydimethylsiloxane-based and has a thickness comprised between 10 micrometers and 100 micrometers.

11. Recording medium according to one of the claims 9 and 10, **characterized in that** the protective layer (8) is deformable.

## Patentansprüche

1. Medium zur optischen Aufzeichnung, das eine aktive Schicht (2) aus anorganischem Material umfasst, die geeignet ist, sich unter der Wirkung einer optischen Strahlung mechanisch zu verformen, und eine Vorderseite (3), die während Schreibvorgängen eine optische Strahlung (4) empfangen soll, und eine Rückseite (5) aufweist, **dadurch gekennzeichnet, dass** es eine zusätzliche Metallschicht (6) aufweist, die auf der Rückseite (5) der aktiven Schicht (2) angeordnet ist.

2. Aufzeichnungsmedium nach Anspruch 1, **dadurch gekennzeichnet, dass** die zusätzliche Metallschicht (6) eine Dicke von 9 bis 12 Nanometem hat.

3. Aufzeichnungsmedium nach einem der Ansprüche 1 und 2, **dadurch gekennzeichnet, dass** das Material der zusätzlichen Metallschicht (6) vorzugsweise aus der aus Aluminium, Gold, Silber und Kupfer gebildeten Gruppe ausgewählt ist.

4. Aufzeichnungsmedium nach einem der Ansprüche 1 bis 3, **dadurch gekennzeichnet, dass** das anorganische Material der aktiven Schicht (2) eine Tellur-ZinkLegierung mit 60 bis 70 Atom prozent Zink und 30 bis 40 Atom prozent Tellur ist.

5. Aufzeichnungsmedium nach Anspruch 4, **dadurch gekennzeichnet, dass** die Legierung 65 % Zink und 35 % Tellur umfasst.

6. Aufzeichnungsmedium nach einem der Ansprüche 4 und 5, **dadurch gekennzeichnet, dass** die aktive Schicht (2) eine Dicke von 15 bis 50 Nanometem hat.

7. Aufzeichnungsmedium nach einem der Ansprüche 1 bis 6, **dadurch gekennzeichnet, dass** es eine halbreflektierende Schicht (7) umfasst, die auf der Vorderseite (3) der aktiven Schicht (2) angeordnet ist und eine Dicke von 4 bis 10 Nanometem hat.

8. Aufzeichnungsmedium nach Anspruch 7, **dadurch gekennzeichnet, dass** die halbreflektierende Schicht (7) aus einem Metall besteht, das aus der aus Aluminium, Gold, Silber, Kupfer, Zink, Titan, Nickel und deren Legierungen gebildeten Gruppe ausgewählt ist.

9. Aufzeichnungsmedium nach einem der Ansprüche 1 bis 8, **dadurch gekennzeichnet, dass** es auf der Rückseite des Mediums eine Schutzschicht (8) aus einem polymeren Material umfasst.

10. Aufzeichnungsmedium nach Anspruch 9, **dadurch gekennzeichnet, dass** die Schutzschicht (8) vorzugsweise eine auf Basis von Polydimethylsiloxan ist und eine Dicke von 10 bis 100 Mikrometern hat.

11. Aufzeichnungsmedium nach einem der Ansprüche 9 und 10, **dadurch gekennzeichnet, dass** die Schutzschicht (8) verform bar ist.
